# EUROPEAN PATENT SPECIFICATION

(11) **EP 4 486 667 B1**
(45) Date of publication and mention of the grant of the patent: **25.03.2026**
(21) Application number: 23707733.4
(22) Date of filing: 01.03.2023
(51) Int. Cl.: B65D 85/804

(54) **HOME-COMPOSTABLE POD FOR BEVERAGE PREPARATION AND USE OF SUCH A POD**
HEIM-KOMPOSTIERBARER POD FÜR GETRÄNKEZUBEREITUNG UND VERWENDUNG DIESES PODS
CAPSULE COMPOSTABLE À LA MAISON POUR LA PRÉPARATION DE BOISSONS ET UTILISATION D'UNE TELLE CAPSULE

(30) Priority: 03.03.2022 EP 22160025
(43) Date of publication of application: 08.01.2025
(73) Proprietor: Société des Produits Nestlé S.A., 1800 Vevey (CH)
(72) Inventor: HEYDEL, Christophe Sébastien Paul, 2025 Chez-Le-Bart (CH); DAGANAUD, Camille Marie-Rose Eliane, 1009 Pully (CH); DOLEAC, Frédéric, 25160 Vaux et Chantegrue (FR)
(74) Representative: Rosolen-Delarue, Katell
(86) International application number: PCT/EP2023/055065
(87) International publication number: WO 2023/166002

(56) References cited:
- EP-A1- 2 223 869
- WO-A1-2006/043098
- WO-A1-2018/042339
- WO-A1-2022/089876

## Description

### 1. Field of the invention

The present invention relates to a pod for preparing a beverage in a beverage production machine, the pod having a wall portion that opens upon interaction with opening elements of the beverage production machine under the effect of rising pressure of a fluid being injected into the pod for preparing the beverage.

### 2. Technical background

Single-serve beverage containers for beverage preparation machines, such as capsules or pods, are known in the art. These beverage containers are commonly used for on demand dispensing of beverages, like coffee, tea or hot chocolate, and enjoy popularity due to fresh tasting, variability of flavours and convenience of the beverage preparation.

Usually, the beverage container containing a beverage component is inserted in a container holder of a beverage preparation machine, the container holder is closed and preparation of the beverage is started. Fluid, such as hot water or milk, is delivered to the beverage container to interact with the beverage component contained inside the beverage container to produce the desired beverage. When a sufficient amount of the fluid fills the beverage container, the beverage container opens under pressure of the fluid to release the prepared beverage. Opening of the beverage container can be accomplished by pressing an extraction face of the beverage container with a force effected by increasing the pressure of the fluid inside the beverage container against an opening structure provided in the container holder such that the extraction face is torn upon reaching a breaking stress. The opening structure can be a number of relief and recessed elements, e.g. pyramid-like elements, onto which the extraction face extends and tears under the effect of the internal pressure of the fluid. Such pressure controlled beverage preparation has the advantage that it can produce a beverage of high quality.

Typically, known beverage containers are made of materials, for which reusing, recycling or composting requires a challenging process, in particular after the use of the beverage container. For example, the beverage containers can often comprise non-biodegradable plastic, e.g. polypropylene, and/or metal, e.g. Aluminium.

Therefore, in the prior art, different attempts were undertaken to replace these materials with biodegradable or compostable materials, such as biodegradable polymers or paper. This poses numerous challenges since food-packaging applications generally place high requirements on the barrier performance of the packaging in order to keep the packaged product's aromas, freshness and integrity intact over the entire intended shelf life. Moreover, it is necessary that the new materials match most of the material characteristics of the established materials, such as their resistance to heat and pressure.

In experiments not disclosed to the public, promising results were obtained for a compostable beverage container, which comprises a cutout that is covered by a material forming the extraction face. The material of the extraction face is different from the rest of the beverage container and is adapted to be opened during the beverage preparation process. For example, patent application PCT/EP21/077158 describes such beverage containers. Further beverage containers are known from WO 2006/043098 A1 and EP 2 223 869 A1.

Therein, it can be found that a high number of complex and at least partially conflicting requirements are placed on the material(s) used for the extraction face. For example, for safeguarding the quality of the beverage prepared in the process, the material of the extraction face has to be adapted so that the beverage container is opened at the right time, at the right places and at the right pressure without delaminating or leaking before. Also, the material must be such that the pod does not adhere with the extraction face to the opening elements of the beverage preparation machine after completion of the beverage preparation process. Moreover, for ensuring the duration of the beverage container's shelf life, a reliable and stable oxygen barrier is required not only at the extraction face but also at the connection of the extraction face to the beverage container. Unfortunately, materials formerly identified as suitable to be used for the extraction face in connection with the above described beverage container often are not home-compostable. Thus, the problem of providing a beverage container with an extraction face made of materials that are home-compostable and that additionally provide a reliable oxygen barrier remains unresolved. Therein, it also has to be considered that home-composting, unlike industrial-composting, does not provide for controlled and (necessarily) advantageous composting conditions so that materials have to meet even higher standards relating to biodegradability and compostability than in the former pod. Accordingly, it is an object of the invention to provide a beverage container, such as a pod, with a design and configuration, which meets the above described requirements. In particular, it is an object of the invention to provide a beverage container that facilitates home-composting of the entire beverage container after its use and that can be provided with a reliable and effective oxygen barrier while maintaining the layout and functionality of known beverage containers so that the (new) beverage container can be used also with known and conventional beverage production machines.

These and other objects, which become apparent upon reading the description, are solved by the subject-matter of the independent claims. The dependent claims refer to preferred embodiments of the invention.

### 3. Summary of the invention

A first aspect of the invention relates to a pod for preparing a beverage in a beverage production machine.

Therein, a pod may be understood, for example, as a receptacle or container enclosing a volume for containing a substance required for beverage preparation. The pod may be flat and (generally) rounded in shape, and/or may have the shape of a (circular and/or double-convex) lens. The pod may be formed by two (with respect to the volume) outwardly curved (bulging) surfaces that may extend in opposite directions from a common parting plane. Thus, unlike a capsule for beverage preparation, such as the ones known in the art, a pod may, for example, not comprise a substantially flat top surface (which in said capsules is typically formed by a lid).

The pod is made of a home-compostable material composition.

Generally, the term "compostable" may be understood as meaning that a material may be substantially broken down into organic matter within a few weeks or months when it is composted. At the end of a composting process, the earth may be supplied with nutrients once the material has completely broken down. International standards, such as EU 13432 or US ASTM D6400, provide a legal framework for specifying technical requirements and procedures for determining compostability of a material. For instance, according to these standards, compostable materials must be biodegradable and disintegrable, i.e. fragmentation and invisibility in the final compost, and must not have negative effects on the composting process and quality. Composting may be accomplished in home composters and/or industrial composting sites. Defined conditions relating to wind, sunlight, drainage and other factors may exist at such sites. Home-compostable materials may be composted in home composters, such as compost barrels or a home compost bin over a period of weeks or months (e.g. at least 90% degradation of materials in 12 months at ambient temperature). As a result of the composting process, the home-compostable materials may be converted into a nutrient-rich soil. Thus, a home-compostable pod can be simply disposed in a home-compost pile after its use. Further, the term "material composition" may be understood, for example, as the constitution, combination and/or arrangement of (different) materials, which preferably form (altogether) a (uniform) structure, such as the pod or a section thereof.

The pod comprises a pod body, which is composed of two half-shells. The two half-shells are connected to each other so as to delimit a chamber for containing a substance for the preparation of the beverage.

Therein, a "chamber" may be understood, for example, as a (sealingly) enclosed hollow space inside the pod body. The pod may be composed of two pod halves, such as the two half-shells, which may be coupled (/joined/attached/adhered/sealed) to each other in order to form together the pod body. In comparison, a capsule for beverage preparation as known in the prior art may comprise a capsule body composed by a continuous wall and may comprise at the top (and/or the bottom) of the capsule an opening that is (are) closed by a (substantially flat) membrane, e.g. a lid (, respectively). Hence, the shape of a capsule may be (primarily) defined by its capsule body while the shape of a pod may be defined by the two half-shells when connected. Further, "substance" may be understood, for example, as any type of (solid, liquid, at least partially soluble and/or percolate-able) matter of a particular or definite chemical constitution. Examples for substances may be instant or roasted ground coffee, tealeaves, syrup or fruit extract concentrate, chocolate, dehydrated edible substances, and/or combinations thereof.

The pod further comprises an injection wall for injecting a fluid in the chamber for preparing the beverage upon interaction of the fluid with the substance.

The pod also comprises a delivery wall. The delivery wall is connected to the pod body to close the chamber.

For example, the delivery wall may be coupled (/joined/attached/adhered/sealed) to the pod body preferably such that an opening into the chamber is covered.

The delivery wall is adapted (configured) to be opened upon (direct) interaction with external opening elements (of the beverage production machine) under the effect of rising pressure of the fluid being injected (through the injection wall) into the pod to dispense the prepared beverage from the pod.

Therein, the expression "adapted to be opened" may be understood, for example, as capability, configuration and/or design of the delivery wall to be provided with holes, punctures and/or ruptures, preferably during the beverage preparation process. For instance, the provision of such openings preferably may be subject to certain conditions and/or circumstances, such as the provision of the opening elements and/or excess of a certain pressure inside the pod. This illustrates that a pod, unlike commonly known pads for beverage preparation, facilitates the build-up of pressure inside the chamber that is sufficient to open the delivery wall in the above-specified manner with external opening elements. Typically, said pads are composed of a soft and flexible filter material designed for being perfused but not for building up pressure inside the pad.

Further, the delivery wall has a multi-layered structure.

Therein, the expression "multi-layered structure" may be understood, for example, as a structure comprising different parts that are arranged in plies, slats, tiers or as strata. Preferably, the layers may be arranged such that they may extend parallel to each other.

The multi-layered structure of the delivery wall comprises at least one primary layer that is made of a cellulose-based material or a regenerated cellulose material. For example, regenerated cellulose material may be provided as a thin, transparent and home-compostable sheet, film or membrane. Advantageously, regenerated cellulose material may have good barrier properties against air, oils and microorganisms.

The multi-layered structure of the delivery wall comprises a secondary layer that has an oxygen barrier function.

Therein, the expression "oxygen barrier function" may be understood, for example, as a feature, property, characteristic or behaviour (of the material) in relation to blocking oxygen (or any other gaseous substance) from passing through a material comprising the oxygen barrier function. Just for completeness, it is noted that it is not intended to express a certain order or importance of the layers by referring to them as "primary" and "secondary" layers.

As a consequence, the delivery wall comprises a structure with layers, each of which can be tailored to providing an individual function of the delivery wall. Thus, it becomes possible to reduce the number of requirements that are to be met by a single material in order to be used for the delivery wall. For example, the described multi-layer structure of the invention facilitates that multiple (different) materials can be used, each capable of performing at least one function. Thus, with such design for the material composition of the delivery wall, more materials can be used for forming at least part of the delivery wall including home-compostable materials. In addition, the design of the delivery wall ensures that the delivery wall comprises at least one layer providing an oxygen barrier. Thereby, it is possible to provide a home-compostable pod having an oxygen barrier.

Thus, with the configuration of the invention, a pod with the above described desired properties can be provided.

According to a preferred embodiment, the primary layer may comprise a cellulose fiber material. Alternatively or additionally, the primary layer may be made of paper, supercalendered paper and/or filter paper.

Thereby, it is possible to provide the primary layer from home-compostable materials. Additionally, it is possible to incorporate additional functionalities into the material of the primary layer, such as a filter function. Moreover, in a supercalender process the structure of the paper may be elastoplastically deformed by one or more rolls under the application of heat. Thereby, surface smoothing of the so treated paper can be achieved. Accordingly, supercalendered paper may have a relatively low surface roughness or small pore size (e.g. compared to normal paper or filter paper used in such applications).

According to a further preferred embodiment, the secondary layer may comprise a coating. Alternatively, the secondary layer may comprise a (multilayer) compostable plastic film. For example, the coating or the (multilayer) compostable plastic film may comprise a layer of Butenediol-vinyl-alcohol-copolymer (BVOH), a layer of Polyvinyl-alcohol (PVOH), Polyhydroxyalkanoates (PHA), a metallization coating, a SiOx based coating, or an AlOx based coating. Therein, preferably the coating or the (multilayer) compostable plastic film may be applied (directly) onto the primary layer.

Thereby, it is possible to provide the secondary layer from home-compostable materials having particularly good oxygen barrier properties. Moreover, the provision of coatings facilitates that the secondary layer may be provided as a continuous and relatively thin layer (e.g. below 0.1 microns), which improves the barrier properties of the delivery wall.

According to a preferred embodiment, at least some of the layers of the multi-layered structure of the delivery wall may be connected by heat sealing, by ultrasonic sealing, and/or by an adhesive. Preferably, the adhesive may be a water-based dispersion of a polyester-polyurethane elastomer. Alternatively or additionally, the adhesive may be applied to at least the primary layer.

Thereby, it is possible to connect and bind the individual layers to each other in an effective manner while keeping the pod home-compostable. The use of the above described adhesive has the additional advantage that it facilitates connecting different polymer films and is particularly suitable for being used in paper multilayer structures.

Accordingly, the bonding strength between the individual layers of the delivery wall can be improved so that the risk of delamination or leakage of the pod can be reduced.

According to a further preferred embodiment, the multi-layered structure may comprise at least two of the primary layers. Therein, preferably the secondary layer may be sandwiched between the primary layers. The primary layers may comprise or may be made of the same or different materials.

Thereby, it is possible to provide the delivery wall with different functionalities and different materials while keeping the pod home-compostable. For example, the pod may comprise as primary layers a supercalendered paper layer or a regenerated cellulose layer and additionally, a filter layer. Thus, besides facilitating the beverage preparation process, the delivery wall can filter out particles that otherwise may leave the chamber during the preparation process. Thereby, the pod can be filled with various substances without risking the quality of the produced beverage.

According to a preferred embodiment, the multi-layered structure of the delivery wall may comprise further an interface layer that preferably may be sandwiched between the primary layer and the secondary layer. Alternatively or additionally, the interface layer may be sandwiched by the primary layers (if more than one is present). Preferably, the interface layer may comprise an adhesive. For example, the adhesive may be a water-based dispersion of a polyester-polyurethane elastomer.

Thereby, a layer can be provided for bonding materials that otherwise may be difficult to connect. In particular, materials too dissimilar for direct bonding may be connected in this way since the interface layer can act as a facilitator for connecting the materials.

According to a further preferred embodiment, the multi-layered structure of the delivery wall may comprise a retention layer. The retention layer may be adapted to be opened upon interaction with external opening elements under the effect of rising pressure of the fluid being injected into the pod. Preferably, the retention layer may be formed by or comprise at least the secondary layer or the primary layer. Alternatively, if more than one of the primary layers is present, the retention layer may be formed by or comprise at least one of the primary layers. Alternatively or additionally, the multi-layered structure of the delivery wall may comprise a filter layer for filtering out particles from the prepared beverage when the prepared beverage is dispensed via the delivery wall. Preferably, the filter layer may be formed by or may comprise the primary layer.

Alternatively, if more than one of the primary layers is present, the filter layer may be formed by or may comprise at least one of the primary layers.

Thereby, the individual layers of the multi-layered structure can be used for providing certain functions needed for the beverage preparation process. For example, the primary layer may be arranged such that it is not pierced during the beverage preparation process in order to provide the desired filter functionality. Conversely, the secondary layer may be arranged facing the opening elements of the beverage production machine in order to reduce the risk of the pod adhering to the opening elements at the end of the beverage preparation process and to provide the desired tearing behaviour when interacting with the opening elements (e.g. by being pushed against the opening elements by expanding) due to the increased pressure inside the pod.

According to a further preferred embodiment, the secondary layer may be arranged opposite to the chamber with respect to the primary layer (or, if more than one primary layer is present, at least one of the primary layers). Alternatively or additionally, the primary layer (or, if more than one primary layer is present, at least one of the primary layers) may be arranged opposite to the chamber with respect to the secondary layer.

Thereby, individual layers of the multi-layered structure can be arranged in a manner most suitable for providing the functionality needed for preparing the beverage.

A further aspect of the invention relates to a pod for preparing a beverage in a beverage production machine, which is made of a home-compostable material composition and which comprises a pod body, an injection wall and a delivery wall as described above for the pod according to the first aspect of the invention. However, unlike the pod of the first aspect of the invention, the present pod comprises a delivery wall that has a multi-layered structure, which comprises a primary layer that has an oxygen barrier function. The primary layer is made of parchment paper or of a compostable biopolymer. The compostable biopolymer may comprise a film based on Polyhydroxyalkanoates (PHA) or a multilayer compostable plastic film, which comprises a layer of Butenediol-vinyl-alcohol-copolymer (BVOH) or a layer of Polyvinyl-alcohol (PVOH).

In other words: the delivery wall can be provided with at least one layer having an oxygen barrier function. Therein, the respective layer may be parchment paper, which, for example, may be understood as a cellulose-based material that has undergone chemical and/or mechanical processing to provide at least resistance to oxygen. Alternatively, the delivery wall may be provided by a compostable biopolymer, which comprises at least one component having the oxygen barrier function. Thereby, it is possible to provide a home-compostable pod having a delivery wall with an oxygen barrier formed by one layer. Thereby, the design and the manufacturing process of the pod can be simplified.

The following description of preferred embodiments of the invention are equally applicable to the pods according to both aforementioned aspects of the invention.

According to a preferred embodiment, the multi-layered structure may comprise a heat seal coating to connect the delivery wall with the pod body. The primary layer (or, if more than one primary layer is present, at least one of the primary layers) may be coated with the heat seal coating on a side facing the chamber.

Thereby, a reliable and strong connection between the delivery wall and the pod body can be ensured. In particular, it is possible to ensure that a reliable oxygen barrier exists even at the connection between the different parts of the pod. Thereby, the shelf life of the pod can be ensured or even extended.

According to a further preferred embodiment, the primary layer (or, if more than one primary layer is present, at least one of the primary layers) may comprise a surface layer with a defined pore size, air permeability and/or surface roughness. The surface layer may be provided by treatment of the primary layer in a chemical process (e.g. using acids) and/or in a mechanical process (e.g. a calender process). For example, the surface layer may be provided for binding the secondary layer, if present in the respective pod. In the respective alternative pod, the surface layer (of the parchment paper) may comprise the oxygen barrier function of the primary layer.

Thereby, it is possible to provide an individual layer of the multi-layered structure with a defined surface quality or additional functionality. For example, the respective layer may be provided with additional barrier properties or improved adherence properties.

According to a preferred embodiment, the injection wall may be provided or may be made integrally with the pod body. For example, the injection wall may be provided or may be made integrally with one of the half-shells. Therein, preferably the injection wall may be provided or may be made integrally with the half-shell other than the half-shell comprising the delivery wall.

Thereby, it is possible to simplify the design and manufacturing of the pod since the pod body comprises the injection wall. Moreover, filling of the pod may be easier. In addition, it may be possible to compact the substance inside the chamber before connecting the delivery wall to the pod body.

According to a further preferred embodiment, the delivery wall may be connected to one of the half-shells to close the chamber. Preferably, the delivery wall may be connected to one of the half-shells to close an opening in the respective half-shell. Alternatively or additionally, the injection wall may be connected to one of the half-shells to close the chamber. Preferably, the injection wall may be connected to one of the half-shells to close an opening in the respective half-shell.

Thereby, it is possible to provide the pod with a configuration where the chamber is fully enclosed by the delivery wall, the injection wall and the pod body. Thereby, the beverage preparation process may be advanced and compatibility with existing beverage production machines may be established.

Preferably, one of the half-shells may comprise the injection wall and the other one of the half-shells may comprise the delivery wall. Moreover, the injection wall and the delivery wall may be provided at opposite sides of the pod body with respect to the chamber. Preferably, the injection wall and the delivery wall may be made of the same material and/or may have the same dimensions.

With anyone of these configurations, the pod can be provided with a symmetric layout. This is advantageous as the user does not have to pay attention on how to place the pod in the beverage production machine. Moreover, the flow path for the fluid can be defined through the pod so that the beverage preparation process can be improved.

According to a preferred embodiment, the half-shells may be each made of or comprise a cellulose-based material, preferably a formable paper material and/or parchment paper. Alternatively or additionally, the half-shells each may have a multi-layered body structure. The multi-layered body structure of the half-shells may comprise a primary body layer made of a cellulose-based material (e.g. a formable paper material), and a secondary body layer with an oxygen barrier function. Preferably, the primary body layer may be arranged opposite to the chamber with respect to the secondary body layer.

Therein, the term "formable" may be understood, for example, as the characteristic of a material being malleable, pliable, and/or shapable, preferably with/without the support of additional tools and/or preferably with/without the application of heat and/or water. For example, in a dry pulp moulding process, a blank of dried cellulose fibres may be provided and formed with a tool into a (permanent) shape of the pod. For instance, the formable material of the pod may facilitate to provide the pod with form-stability, stiffness and/or rigidity, each of which preferably being sufficient for building up pressure inside the pod during beverage preparation.

Thereby, it is possible to provide the pod body with an oxygen barrier also. In addition, the pod body can be provided in numerous shapes and forms as the formable material allows for being relatively free in designing the pod body.

According to a further preferred embodiment, the secondary body layer may be made integral with the delivery wall (or, preferably, the secondary body layer of the delivery wall) as a single layer of the pod (e.g. as one continuous layer).

Thereby, it is possible that the pod body and the delivery wall can share at least one layer, i.e. at least one layer in each of the pod body and the delivery wall may be common to both. Accordingly, the design of the pod can be simplified. In addition, the oxygen barrier properties of the pod can be improved since it is possible to provide the oxygen barrier as a single layer extending continuously with the pod body and the delivery wall. Preferably, the primary layer (or, if more than one primary layer is present, at least one of the primary layers) may be arranged opposite to the primary body layer with respect to the single layer (or, preferably, with respect to the secondary layer or to the secondary body layer). Preferably, at the delivery wall, the single layer or the secondary layer may be arranged opposite to the chamber with respect to the primary layer (or, if more than one primary layer is present, at least one of the primary layers).

With these configurations, it is possible to use the primary layer as a filter in the pod since the primary layer may be arranged inside the chamber rather than on the side facing the opening elements of the beverage production machine.

A further disclosure relates to a pod for preparing a beverage in a beverage production machine, wherein the pod is made of a home-compostable material composition and comprises:
- a pod body being composed of two half-shells being connected to each other so as to delimit a chamber for containing a substance for the preparation of the beverage,
- an injection wall for injecting a fluid in the chamber for preparing the beverage upon interaction of the fluid with the substance; and
- a delivery wall being connected to the pod body to close the chamber, the delivery wall being adapted to be opened upon interaction with external opening elements under the effect of rising pressure of the fluid being injected into the pod to dispense the prepared beverage from the pod,
wherein the half-shells each have a multi-layered body structure comprising:
- a primary body layer made of a cellulose-based material, preferably a formable paper material or parchment paper, and
- a secondary body layer with an oxygen barrier function,
wherein the delivery wall has a multi-layered structure comprising:
- at least one primary layer made of a cellulose-based material or a regenerated cellulose material, and
- a secondary layer with an oxygen barrier function,
wherein the secondary layer and the secondary body layer of the respective half-shell are made integral as a single layer of the pod.

Thereby, it is possible that the pod body and the delivery wall can share at least one layer, i.e. at least one layer in each of the pod body and the delivery wall may be common to both. Accordingly, the design of the pod can be simplified. In addition, the oxygen barrier properties of the pod can be improved since it is possible to provide the oxygen barrier as a single layer extending continuously in the pod body and the delivery wall.

The preferred embodiments described above for the (two) pods according to the first and consecutive further aspect of the invention are equally applicable to the pod according to this further aspect of the invention and vice versa.

According to a preferred embodiment, the half-shells may be each made of the same material or the same material composition.

Thereby, it is possible to provide a pod with a symmetric configuration so that the manufacturing process can be simplified.

According to a further preferred embodiment, the primary body layer may be arranged opposite to the chamber with respect to the single layer or with respect to the secondary body layer of the respective half-shell.

Thereby, the single layer (and thus, the oxygen barrier) can be protected from external mechanical stresses at least at the pod body so that the pod's shelf life can be improved.

According to a preferred embodiment, at the delivery wall, the single layer or the secondary layer may be arranged opposite to the chamber with respect to the primary layer or, if present, at least one of the primary layers.

Thereby, it can be ensured that the single layer faces the opening elements so that it can be avoided that the pod adheres to the opening elements of the beverage production machine at the end of the beverage preparation process.

According to a further preferred embodiment, at the delivery wall, the primary layer or, if present, at least one of the primary layers may be arranged opposite to the primary body layer of the respective half-shell with respect to the single layer, preferably to the secondary layer or to the secondary body layer of the respective half-shell.

Thereby, it can be achieved that the primary layer can act as a filter for filtering out particles from the prepared beverage when the prepared beverage is dispensed via the delivery wall. Also, the primary layer can be pierced by the opening elements in a manner that openings reducing in diameter towards the chamber are formed therein. According to a preferred embodiment, the delivery wall, preferably the primary layer (or, if present, at least one of the primary layers), may overlap with the primary body layer along the delivery wall's circumference or the primary layer's circumference, preferably about its entire circumference.

Thereby, it can be avoided that particles of the substance contained inside the chamber leave the pod during the beverage preparation as the opening elements are not able to penetrate the area of overlap between the primary body layer and the delivery wall.

A further disclosure relates to a method for manufacturing a pod for preparing a beverage in a beverage production machine. The pod is made of a home-compostable material composition. The method comprises the steps of:
- providing two first sheet elements each being made of a formable cellulose-based material, preferably a formable paper material or parchment paper;
- cutting an opening into one of the first sheet elements;
- providing two second sheet elements each being made of a material having an oxygen barrier function;
- connecting each of the first sheet elements with one of the second sheet elements to provide a multi-layered body structure, respectively, each of which comprising:
   ∘ a primary body layer made by the respective first sheet element, and
   ∘ a secondary body layer made by the respective second sheet element, wherein a covering part of the second sheet element completely covers the opening of the respective first sheet element,
- forming the two first sheet elements or the two multi-layered body structures into the shape of a half-shell, respectively;
- covering the covering part across the opening with a sheet material and connecting the sheet material preferably to the second sheet element, preferably by heat sealing or ultrasonic sealing, at a connection area circumferentially surrounding the opening, wherein the so connected sheet material along with the covering part forms a delivery wall having a multi-layered structure comprising:
   ∘ at least one primary layer made by the sheet material, and
   ∘ a secondary layer made by the covering part being integral with the secondary body layer to form a (one) single layer of the pod;
- forming an injection wall of the pod for injecting a fluid into the pod;
- providing a substance required for the preparation of the beverage; and
- connecting the two half-shells to form a pod body around the substance to form the pod, wherein the pod body together with the delivery wall and the injection wall delimit a chamber containing the substance for preparing the beverage upon interaction of the substance with the fluid injected through the injection wall, and wherein the delivery wall is adapted to be opened upon interaction with opening elements of the beverage production machine under the effect of rising pressure of the fluid being injected into the pod to dispense the prepared beverage from the pod.

Thereby, it is possible to manufacture a home-compostable pod with an oxygen barrier. The preferred embodiments described above for the (three) pods according to the first aspect and further aspects of the invention are equally applicable to the pod being manufactured with the method according to this further aspect of the invention.

According to a preferred embodiment, the step of covering the covering part may be applied after forming the first sheet elements or after forming the multi-layered body structures into the shape of a half-shell, respectively.

According to a further preferred embodiment, the step of covering the covering part may be applied before forming the first sheet elements or the multi-layered body structures into the shape of a half-shell, respectively, wherein preferably the connection area may be pinched from opposite sides of the first sheet element or of the multi-layered body structure when forming the respective half-shell.

Thereby, shearing forces at the connection area can be reduced or even avoided.

According to a preferred embodiment, the first sheet elements or the two multi-layered body structures may be formed into the shape of a half-shell, respectively, by drawing at least part of the respective multi-layered body structure into a forming die, preferably by mechanical action of a punch, more preferred by deep drawing the respective multi-layered body structure.

According to a further preferred embodiment, each of the two half-shells may comprise a circumferential flange, wherein the two half-shells may be connected to each other via the circumferential flanges.

According to a preferred embodiment, the two first sheet elements may be provided by cutting or punching a sheet made of the formable cellulose-based material. Preferably, cutting the opening in the first sheet element may be done before, upon or after the two first sheet elements are cut or punched from the sheet.

According to a further preferred embodiment, the injection wall may be formed when forming one of the half-shells, wherein preferably the one half-shell may be the half-shell other than the half-shell comprising the opening or the delivery wall. Alternatively, forming the injection wall may comprise the steps of:
- cutting another opening into one of the first sheet elements, which preferably may be the first sheet element other than the first sheet element into which the said opening is cut, so that the respective first sheet element may comprise the other opening;
- covering the other opening with another covering part of the respective second sheet element upon connecting the respective first and second sheet elements;
- covering the covering part across the other opening with another sheet material and connecting the other sheet material, preferably by heat sealing or ultrasonic sealing, at another connection area circumferentially surrounding the other opening, the so connected other sheet material along with the other covering part forming the injection wall having a multi-layered structure comprising:
   ∘at least one other primary layer made by the respective first sheet element, and
   ∘ another secondary layer made by the other covering part being integral with the respective secondary body layer to form a or the single layer of the pod.

According to a preferred embodiment, the half-shells may be formed before or after cutting the opening into the first sheet element, and preferably before or after cutting or punching the other opening, if present, into the respective first sheet element.

According to a further preferred embodiment, at least one or both of the first sheet elements may have a disc shape.

According to a preferred embodiment, the two half-shells may be connected under the application of vacuum and under the application of heat sealing or ultrasonic sealing, wherein preferably the half-shells may be sealingly connected via a sealing section extending along the perimeter of each of the half-shells, preferably along the circumferential flanges, if present.

A further aspect of the invention relates to the use of anyone of the aforementioned pods (including the pod produced in the manufacturing method) for preparing a beverage in a beverage production machine that has a pod holder with opening elements (i.e. external to the pod).

Thereby, a beverage can be produced with a pod that consists of home-compostable materials while retaining all functionalities known from pods established in the prior art. Further, the pod can be used with already existing beverage production machines. Thus, it is possible to produce a beverage of high quality with a pod that overcomes the problems presently existing with the disposal of prior art pods.

### 4. Brief description of drawings

Further features, advantages and objects of the invention will become apparent for the skilled person when reading the following detailed description of embodiments of the invention and when taking in conjunction with the figures of the enclosed drawings. In case numerals have been omitted from a figure, for example for reasons of clarity, the corresponding features may still be present in the figure.
- **Figure 1**: shows a schematic cross-section of an embodiment of a pod according to the invention.
- **Figure 2**: shows a perspective view of a further embodiment of the pod according to the invention.
- **Figures 3 to 11**: show each an enlarged sectional view of a portion of a delivery wall from different embodiments of the pod according to the invention.
- **Figure 12**: shows an enlarged sectional view of a portion of a delivery wall from an alternative pod according to the invention.
- **Figure 13**: shows a schematic cross-section of a further embodiment of a pod according to the invention.

### 5. Detailed description

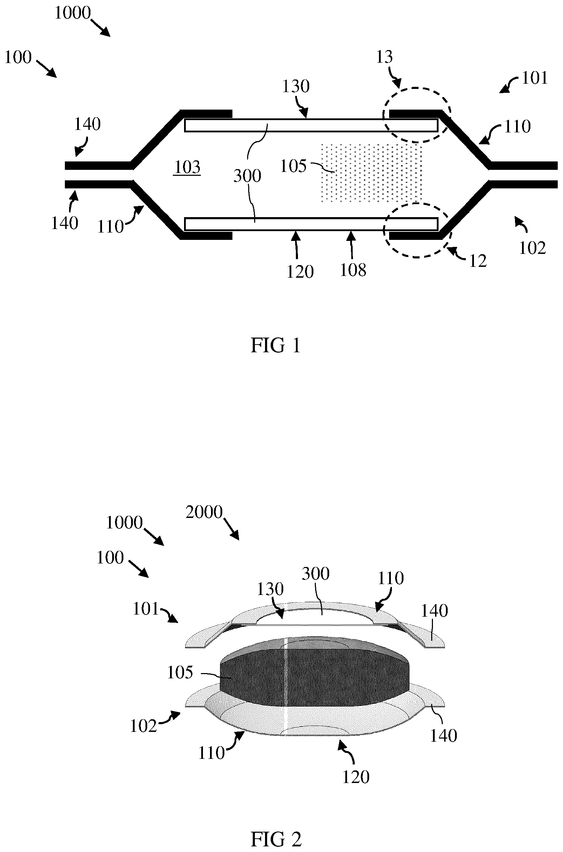

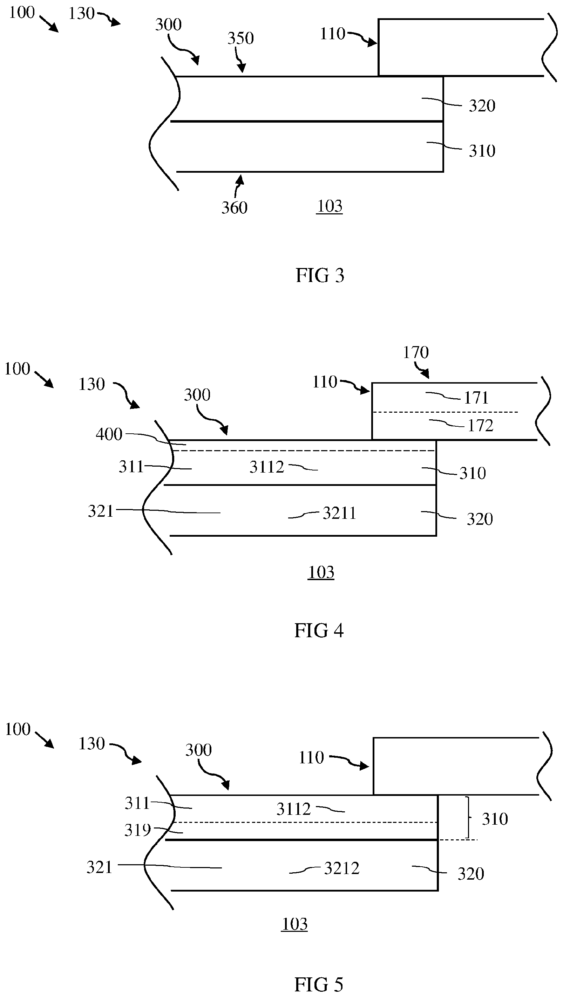

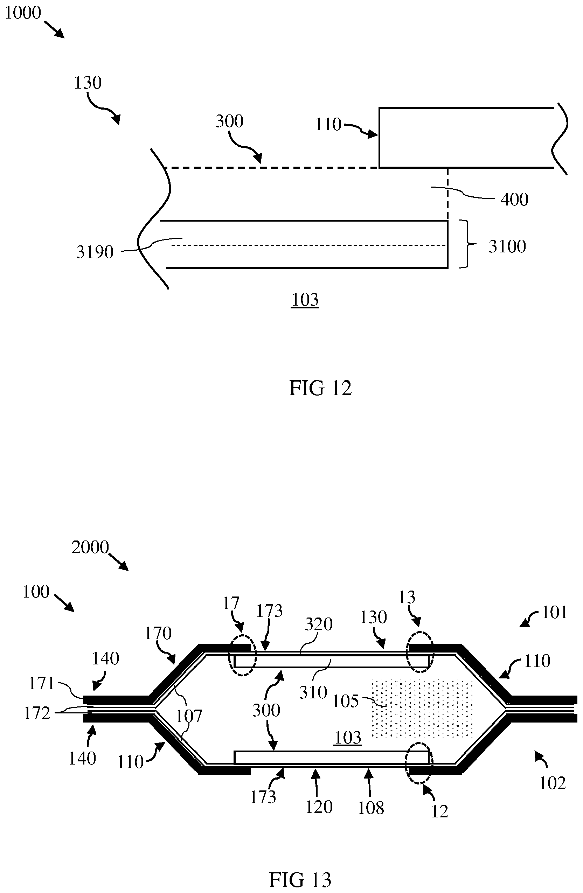

Figures 1, 2 and 13 show different views and aspects of differently configured pods 100, 1000, 2000 according to different aspects of the present invention. Figures 3 to 11 show different embodiments of a wall section of the pod 100 according to a first aspect of the present invention while Figure 12 shows an embodiment of said wall section of the pod 1000 according to a further aspect of the present invention.

The invention relates in general to a pod 100, 1000, 2000 (suitable/configured) for preparing a beverage in a beverage production machine. The beverage production machine may comprise elements for injecting fluid into the pod 100, 1000, 2000 and elements for opening the pod 100, 1000, 2000 under the effect of rising pressure of a fluid that is injected into the pod 100, 1000, 2000. Figures 1, 2 and 13 show examples of the pods 100, 1000, 2000.

The pod 100, 1000, 2000 is made of a home-compostable material composition. Thus, for example, the pod 100, 1000, 2000 may be made entirely from home-compostable materials so that the pod 100, 1000, 2000 may be simply disposed in industrial and in home compost piles after its use. Thus, the entire contents of the pod 100, 1000, 2000 including any beverage components contained therein, may be home-compostable.

The pod 100, 1000, 2000 comprises a pod body 110. The pod body 110 is exemplarily illustrated in all Figures. For example, the pod body 110 may provide the stiffness and rigidity required for building up enough pressure inside the pod 100, 1000, 2000 during beverage preparation. As exemplarily illustrated in all Figures, the pod body 110 may delimit (or define) the general boundaries (and/or shape) of the pod 100, 1000, 2000. Preferably, the pod body 110 may have a shape that corresponds to the shape of the pod holder of the beverage production machine.

The pod body 110 is composed of two half-shells 101, 102 as exemplarily illustrated in Figures 1, 2 and 13. The half-shells 101, 102 may each be made of the same material or of the same material composition. For example, the half-shells 101, 102 may be each comprise a cellulose-based material, preferably a formable paper material and/or parchment paper. For example, the material of the half-shells 101, 102 may be formable by being stretchable (and/or deformable permanently) in traverse and longitudinal directions. For example, the material of the half-shells 101, 102 may comprise a formable paper material, preferably having a grammage between 80 g/m² to 150 g/m². For example, the formable paper material may be a Kraft paper. Preferably, the formable paper material may be exclusively made of cellulose fibres. The material of the half-shells 101, 102 may have a tensile strength between 2000 MPa and 30 000 MPa, preferably 26 000 MPa in the cross-direction of the paper material, and/or preferably 2600 MPa in the machine-direction of the paper material. Preferably, the half-shells 101, 102 may be configured to have an elongation at break in the range between 8% and 15% at a tensile strength between 2000 MPa to 40 000 MPa. Therein, elongation at break may generally be understood as the ratio between changed length and initial length after breakage of the test specimen, and can be used as a measure to quantify the resistance of a material to changes of the shape without breaking or crack formation. For example, the elongation at break can be determined by tensile testing following EN ISO 527. The work up to break of the material of the half-shells 101, 102 may be between 100 Nmm and 200 Nmm. For example, by providing the half-shells 101, 102 with any of the aforementioned configurations, it is possible to provide the pod 100, 1000, 2000 with sufficient rigidity, stiffness and/or form-stability to build up pressure inside the pod 100 during the preparation of a beverage.

Moreover, it is conceivable that the half-shells 101, 102 each may have a multi-layered body structure 170. This is exemplarily shown in Figures 4 and 13. Therein, the multi-layered body structure 170 may comprise a primary body layer 171 that may be made of a cellulose-based material, such as a formable paper material. The multi-layered body structure 170 may comprise further a secondary body layer 172 with an oxygen barrier function. For example, the secondary body layer 172 may be a compostable plastic material (film), such as polybutylene adipate terephthalate (PBAT) and/or polylactic acid (PLA). Thereby, it is possible, for example, to provide the pod body 110 with an oxygen barrier while maintaining compostability of the pod body 110. For example, the oxygen barrier provided by the secondary body layer 172 may be lower than 5 cc/m²-day, preferably lower than 1 cc/m²-day, more preferred lower than 0.5 cc/m²-day. Further, the half-shells 101, 102 may have any shape or form. Preferably, the shape of the half-shells 101, 102 may correspond with the geometry of the pod holder. Examples for the geometry and design of the half-shells 101, 102 can be taken from Figures 1, 2 and 13. In these Figures, it is exemplarily illustrated that each of the two half-shells 101, 102 may comprise a circumferential flange 140, which may extend radially outward with respect to the respective half-shell 101, 102. Further, each of the half-shells 101, 102 may extend axially from a radially inner edge of the circumferential flange 140. The half-shells 101, 102 may be identical or different to each other. For example, the half-shells 101, 102 may differ in height. The half-shells 101, 102 may be provided with an opening 108. This is exemplarily illustrated in all Figures. The opening 108 may have any shape and/or size. Preferably, the opening 108 may be circular and/or may be a through hole. The diameter of the opening 108 may be between 18 mm and 30 mm, preferably 24 mm. The half-shells 101, 102 may comprise one or more (similar and/or different) openings. Generally, there is no limitation in the number of openings 108. Preferably, the opening 108 may be configured and/or provided/arranged such that elements of the beverage production machine, like opening elements and/or injection elements, do not engage and/or come into contact with the remaining parts of the pod body 110 in the beverage production machine during the beverage preparation. For example, the opening 108 may be provided in the middle of the pod body 110 or concentrically with the circumferential flange 140 as exemplarily illustrated in Figures 1, 2 and 13. The opening 108 may be provided in one or both of the half-shells 101, 102, for example by cutting. For example, Figures 1 and 13 illustrate that the opening 108 may be provided in both half-shells 101, 102 while the pod 100, 1000, 2000 in Figure 2 is exemplarily illustrated with having been provided with only one opening 108.

The two half-shells 101, 102 are connected to each other so as to delimit a chamber 103. All Figures show this exemplarily. For example, the two half-shells 101, 102 may be (sealingly) connected to each other via their circumferential flanges 140 under vacuum and by heat or ultrasonic sealing. Preferably, the secondary body layer 172 may enclose the chamber 103 by arranging the primary body layer 171 opposite to the chamber 103 with respect to the secondary body layer 172. This is exemplarily shown in Figure 13.

The chamber 103 is suitable for containing a substance 105 for the preparation of the beverage. For example, the substance 105 may be provided as a tablet made of compressed or compacted beverage powder, such as coffee powder. In general, the substance 105 may be any (extractable) food substance, such as ground coffee powder, tea or chocolate.

The pod 100, 1000, 2000 further comprises an injection wall 120 for injecting a fluid in the chamber 103 for preparing the beverage through interaction of the fluid with the substance 105. For example, the injection wall 120 may interact or engage with injection elements of the beverage production machine during the beverage preparation process, through which a (hot, e.g. 60 to 120 degree Celsius) fluid (under pressure, e.g. 1 to 20 bar) may be injected into the pod 100, 1000, 2000. Therein, it is conceivable that the injection wall 120 may be integrally provided with the pod body 110. This is exemplarily illustrated in Figure 2. Alternatively, the injection wall 120 may be connected to the pod body 110 (or to one of the half-shells 101, 102) to close the chamber 103. For example, the injection wall 120 may close the opening 108 in the pod body 110 (or in the respective half-shell 101, 102). For this, the injection wall 120 may be connected to the pod body 110 at an attachment area 12 that circumferentially surrounds the opening 108. This is exemplarily illustrated in Figures 1 and 13, where the injection wall 120 is formed as a wall portion separate from the pod body 110 to close the chamber 103 by closing the opening 108. For example, the injection wall 120 may be made from a different material than the pod body 110.

The pod 100, 1000, 2000 further comprises a delivery wall 130. The delivery wall 130 may be provided so that the beverage can be dispensed from the pod 100, 1000, 2000 through the delivery wall 130 during the process of preparing the beverage. The delivery wall 130 is exemplarily shown in all Figures.

The delivery wall 130 is connected to the pod body 110 (or one of the half-shells 101, 102) to close the chamber 103. Preferably the delivery wall 130 may close the opening 108 in (one of) the half-shells 101, 102. This is exemplarily illustrated in all Figures. For example, the delivery wall 130 may be connected to the pod body 110 at a connection area 13 circumferentially surrounding the opening 108. The delivery wall 130 may be connected to the pod body 110 by heat sealing, for instance. The delivery wall 130 may be provided on the one half-shells 101, 102 other than the half-shell 101, 102 comprising the injection wall 120. Further, the injection wall 120 and the delivery wall 130 may be provided at opposite sides of the pod body 110 with respect to the chamber 103 so that, for example, one of the half-shells 101, 102 may comprise the injection wall 120 and the other one may comprise the delivery wall 130. Figures 1, 2 and 13 show this exemplarily.

The injection wall 120 and the delivery wall 130 may be made of the same or different material. The injection wall 120 and the delivery wall 130 may have the same or different dimensions. Preferably, the injection wall 120 and the delivery wall 130 may be arranged concentrically to each other and/or to the circumferential flanges 140. Figures 1, 2 and 13 show this exemplarily. For example, in case the injection wall 120 and the delivery wall 130 may be made of the same material and may have the same dimensions, the attachment area 12 and the connection area 13 may be identical to each other.

The delivery wall 130 is adapted to be opened upon interaction with opening elements of the beverage production machine (i.e. opening elements may be external to the pod 100, 1000, 2000) under the effect of rising pressure of the fluid being injected into the pod 100, 1000, 2000 to dispense the prepared beverage from the pod 100, 1000, 2000. For instance, the (external) opening elements may be provided by a pyramid plate in the pod holder of the beverage production machine.

The delivery wall 130 has a multi-layered structure 300. This is exemplarily shown in all Figures.

For example, the delivery wall 130 of the pod 100 has a multi-layered structure 300. Figure 3 illustrates schematically an exemplary configuration of the multi-layered structure 300.

The multi-layered structure 300 comprises at least one primary layer 310 (in the following simply referred to as "the primary layer 310", meaning one or more of the primary layers 310). This is exemplarily illustrated in Figures 3 to 11.

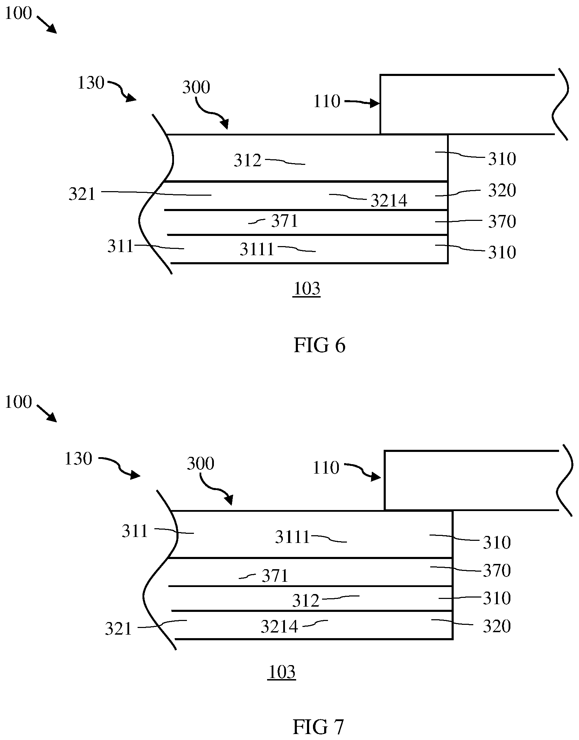

The primary layer 310 is made of a cellulose-based material 311. More specifically, the primary layer 310 may comprise a cellulose fiber material. For example, the primary layer 310 may be made of paper 3111, supercalendered paper 3112 or filter paper 3113. This is exemplarily illustrated in Figures 4 to 11. Alternatively, the primary layer 310 is made of a regenerated cellulose material 312 (e.g. cellophane). For example, the regenerated cellulose material 312 may be provided as a film or membrane preferably having stiffness. The regenerated cellulose material 312 may be produced from shredded wood pulp. The regenerated cellulose material 312 is preferably fully home-compostable. Figures 6, 7, 10 and 11 illustrate examples for the primary layer 310 being formed by the regenerated cellulose material 312.

It is also conceivable that the multi-layered structure 300 may comprise more than one primary layer 310. For example, in Figures 6 to 11 the multi-layered structure 300 is exemplarily illustrated as having at least two of the primary layers 310. Therein, the primary layers 310 may comprise or may be made of the same or different materials.

The multi-layered structure 300 of the delivery wall 130 of the pod 100 further comprises a secondary layer 320 with an oxygen barrier function. Figures 3 to 11 illustrate the secondary layer 320. The secondary layer 320 may comprise BVOH, PVOH, PHA, metal, SiOx or AlOx, for instance. However, it is also conceivable that the secondary layer 320 may comprise other materials that are compatible with the pod's 100 home-compostabilitly. For example, the oxygen barrier provided by the secondary layer 320 may be lower than 5 cc/m²-day, preferably lower than 1 cc/m²-day, more preferred lower than 0.5 cc/m²-day.

For example, the secondary layer 320 may be provided as either a coating 321 or a (multilayer) compostable plastic film. For example, in Figures 4 to 11 the secondary layer 320 is exemplarily illustrated as a layer of BVOH 3211, a layer of PVOH 3212, a layer of PHA 3213, a layer of a metallization coating 3214, a layer of SiOx based coating 3215, or as a layer of an AlOx based coating 3216. Preferably, the coating 321 or the (multilayer) compostable plastic film may be applied (directly) onto the primary layer 310, such as exemplarily illustrated in the Figures. For example, by applying the coating 321 to the regenerated cellulose material 312 an effective moisture and gas barrier can be provided as well as the regenerated cellulose material 312 may become heat sealable. Thus, the so configured delivery wall 130 may have a low permeability to gasses, good resistance to grease and water and may become printable.

Preferably, the secondary layer 320 and the primary layer 310 may be made of or comprise different (types of) materials. For example, the primary layer 310 may be cellulose based while the secondary layer 320 may be a non-cellulose based material. Therein, it is also conceivable that the material of the pod body 110 may be different to the multi-layered structure 300. For example, the order of the layers may be different or different materials may be used.

The various layers of the multi-layered structure 300 of the delivery wall 130 may be connected to each other by heat sealing, ultrasonic sealing, and/or by use of an adhesive 371 being applied between layers. For example, the adhesive 371 may be applied to at least the primary layer 310, thereby preferably forming an interface layer 370 for connecting different layers. This is exemplarily shown in Figures 6 to 11. In experiments, it was found that good results may be achieved with a preferably water-based dispersion of a polyester-polyurethane elastomer. Thereby, it was found that this composition of the adhesive 371 allows to make the pod 100 home-compostable because the adhesive 371 itself is compostable. Naturally it is also conceivable that the multi-layered structure 300 may comprise more than one interface layer 370.

There are no limitations on the order of the different layers of the multi-layer structure 300. For example, if more than one primary layer 310 is provided, it is conceivable that the secondary layer 320 may be sandwiched between these primary layers 310. This is exemplarily illustrated in Figures 6 and 8 to 11. Similarly, the interface layer 370 may be sandwiched between the primary layers 310. This is exemplarily illustrated in Figures 6 to 11. Alternatively or additionally, at least one of the primary layers 310 and the secondary layer 320 may sandwich the interface layer 370 as exemplarily illustrated in Figures 6 to 11.

Preferably, the secondary layer 320 may be arranged opposite to the chamber 103 with respect to the primary layer 310 or, if present, at least one of the primary layers 310. This is exemplarily illustrated in Figures 4 to 11. Alternatively, the primary layer 310 or, if present, at least one of the primary layers 310 may be arranged opposite to the chamber 103 with respect to the secondary layer 320. Figures 3, 6, 8 to 11 show this exemplarily.

In the following, the examples illustrated in the Figures are described in more detail:
Figures 4 and 5 illustrate exemplarily two embodiments of the delivery wall 130, each having the multi-layered structure 300, wherein the primary layer 310 may be formed by a cellulose-based material 311, namely by the supercalendered paper 3112, and wherein the secondary layer 320 may be formed by the coating 321, namely a coating comprising BVOH that forms the BVOH-layer 3211. In Figures 4 and 5, the secondary layer 320 is exemplarily illustrated as facing towards the chamber 103 while the primary layer 310 faces to the outside of the chamber 103 of the pod 100.

Figures 6 and 7 illustrate exemplarily two embodiments of the delivery wall 130, each having the multi-layered structure 300 comprising two primary layers 310, (one) the interface layer 370 and (one) the secondary layer 320. For example, one of the primary layers 310 may be formed by regenerated cellulose material 312 while the other one of the primary layers 310 may be formed by a cellulose-based material 311, such as the paper 3111. The secondary layer 320 may be formed by the coating 321 of the regenerated cellulose material 312, which may be a metallization coating 3214. The interface layer 370 may connect the two primary layers 310 (Figure 7) or the secondary layer 320 to the one primary layer 310 other than the one comprising the regenerated cellulose material 312 (Figure 6). Preferably, the secondary layer 320 may be sandwiched between the other layers.

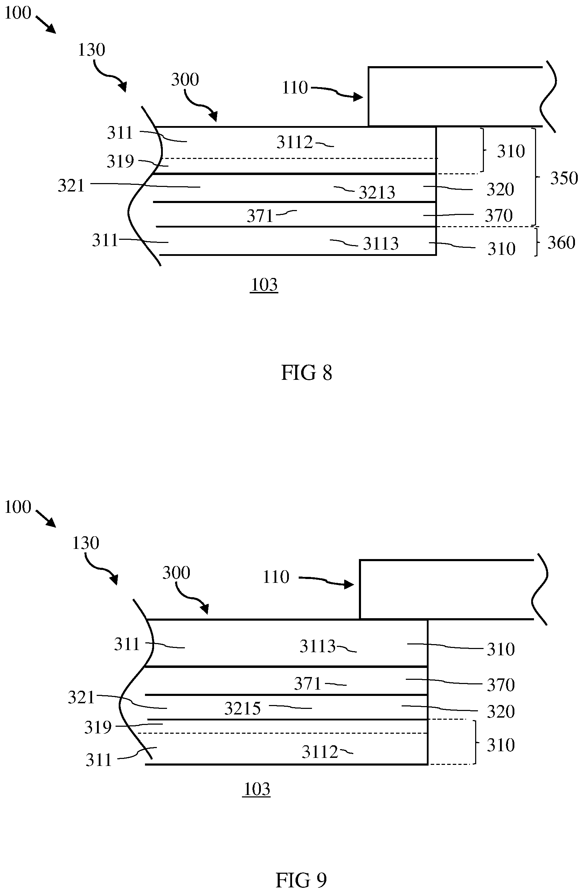

Figures 8 and 9 illustrate exemplarily two embodiments of the delivery wall 130, each having the multi-layered structure 300 comprising two primary layers 310, (one) the interface layer 370 and (one) the secondary layer 320. For example, both of the primary layers 310 may be formed by a cellulose-based material 311, such as the supercalendered paper 3112 and the filter paper 3113. The secondary layer 320 may be formed by the coating 321 of the supercalendered paper 3112, which may be the PHA based coating 3213 (Figure 8) or the SiOx based coating 3215 (Figure 9). The interface layer 370 may connect the secondary layer 320 to the primary layer 310. Preferably, the filter paper 3113 may be provided opposite to the chamber 103 with respect to the secondary layer 320.

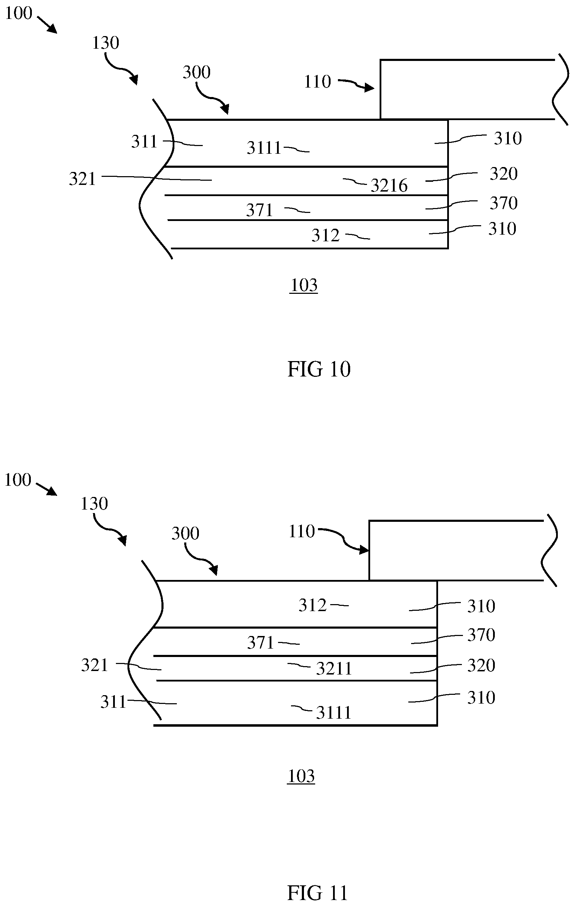

Figures 10 and 11 illustrate exemplarily two embodiments of the delivery wall 130, each having the multi-layered structure 300 comprising two primary layers 310, (one) the interface layer 370 and (one) the secondary layer 320. For example, one of the primary layers 310 may be formed by regenerated cellulose material 312 while the other one of the primary layers 310 may be formed by the cellulose-based material 311, such as the paper 3111. The secondary layer 320 may be formed by the coating 321 of the regenerated cellulose material 312, which may be the AlOx based coating 3216 (Figure 10) or the BVOH based coating 3211 (Figure 11). The interface layer 370 may connect the secondary layer 320 to the regenerated cellulose material 312.

As described above, the half-shells 101, 102 forming the pod body 110 may have the multi-layered body structure 170, which may comprise the primary body layer 171 (e.g. a formable paper) and the secondary body layer 172 with the oxygen barrier function.

Therein, it is further conceivable that the secondary body layer 172 may be made integral with the delivery wall 130 as a single layer 107 of the pod 100. For example, the secondary body layer 172 may be made integral with the secondary layer 320 of the delivery wall 130 as exemplarily illustrated in Figure 13. Thereby, it is possible to form a (continuous/unitary/uniform) layer of the pod 100 that is common to the delivery wall 130 and the pod body 110 while maintaining the multilayer structure of both segments of the pod 100. For example, the secondary body layer 172 may extend completely over the opening 108 of the respective half-shell 101, 102. The chamber 103 may be (fully) enclosed/delimited by the secondary body layer 172. Figure 13 further exemplarily shows that the primary layer 310 may be arranged opposite to the primary body layer 171 with respect to the single layer 107. Figure 13 also illustrates that, at the delivery wall 130, for example, the single layer 107 may be arranged opposite to the chamber 103 with respect to the primary layer 310 (or, if present, at least one of the primary layers 310).

Alternatively or additionally, it is also conceivable that this and similar embodiments of the pod 100, such as exemplarily illustrated in Figure 13 as pod 2000, may form an independent part of the invention.

In the pod 2000, unlike in the pod 100 from above, each of the half-shells 101, 102 necessarily have the aforementioned multi-layered body structure 170, which comprises the primary body layer 171 made of a cellulose-based material (e.g. a formable paper material or may be parchment paper) and the secondary body layer 172 with an oxygen barrier function. This is exemplarily illustrated in Figure 13.

The delivery wall 130 of the pod 2000 has the multi-layered structure 300 as described above, namely comprising the at least one primary layer 310 and the secondary layer 320, which provides the oxygen barrier function.

For example, in the pod 2000, the primary layer 310 and the primary body layer 171 may be made of the same material. Preferably, the primary layer 310 and the primary body layer 171 may be made both of formable paper. The secondary layer 320 may be made of a composition of PBAT and/or PLA.

In the pod 2000, the secondary layer 320 and the secondary body layer 172 of the respective half-shell 101, 102 are made integral as a single (unitary) layer 107 of the pod 2000. For example, it is conceivable that the secondary layer 320 may be sealed onto the secondary body layer 172 by heat sealing. After sealing, the primary layer 310 may be arranged opposite to the opening 108 with respect to the secondary layer 320 and/or the secondary body layer 172. Thereby, the oxygen barrier at the opening 108 may be particularly advantageous as more sealing material may exist in this area.

Figure 13 illustrates exemplarily that the primary body layer 171 may be arranged opposite to the chamber 103 with respect to the single layer 107 or the secondary body layer 172 of the respective half-shell 101, 102. Further, at the delivery wall 130, the primary layer 310 may be arranged opposite to the primary body layer 171 of the respective half-shell 101, 102 with respect to the single layer 107. Preferably, the delivery wall 130 (or the primary layer 310) may overlap with the primary body layer 171 along the entire circumference of the delivery wall 130 (or preferably the primary layer's 310 circumference). This is exemplarily indicated in Figure 13 by circled area 17 that indicates an area of overlap between the respective layers.

Generally, each of the pods 100, 2000 may comprise the delivery wall 130 having the multi-layered structure 300, which may comprise a retention layer 350 and/or a filter layer 360. This is exemplarily illustrated in Figures 3 and 8.

The retention layer 350 may be provided for being adapted to be opened upon interaction with external opening elements under the effect of rising pressure of the fluid being injected into the pod 100, 2000. In comparison, the filter layer 360 may be provided for filtering out particles from the prepared beverage dispensed via the delivery wall 130. The retention layer 350 may be formed by or comprise at least the secondary layer 320 or the primary layer 310 or, if present, at least one of the primary layers 310. For example, the retention layer 350 (or the secondary layer 320) may be pierced during beverage preparation. In contrast, the filter layer 360 may be formed by or may comprise the primary layer 310 or, if present, at least one of the primary layers 310. For example, the filter layer 360 (or the primary layer 310) may be formed by the filter paper 31113 and/or may remain intact during beverage preparation.

Alternatively or additionally, according to the invention it is further conceivable to provide pod 1000, which is exemplarily illustrated in Figure 12.

Unlike the pod 100 and the pod 2000, the delivery wall 130 has a multi-layered structure 300 that comprises a primary layer 3100 having already an oxygen barrier function. Therein the primary layer 3100 is made of parchment paper or of a compostable biopolymer. The compostable biopolymer comprises a film based on PHA or a multilayer compostable plastic film, which comprises a layer of BVOH or a layer of PVOH. This is exemplarily illustrated in Figure 12. For example, the oxygen barrier provided by the primary layer 3100 may be lower than 5 cc/m²-day, preferably lower than 1 cc/m²-day, more preferred lower than 0.5 cc/m²-day.

Generally, it is also conceivable that in anyone of the aforementioned pods 100, 1000, 2000 one of the layers of the multi-layered structure 300 may be a heat seal coating 400 to connect the delivery wall 130 with the pod body 110. For this, a layer of the multi-layered structure 300 facing the chamber 103 (such as the in the following described primary layer(s) 310) may be coated with the heat seal coating 400. This is exemplarily illustrated in Figures 4 and 12.

Moreover, it is generally also conceivable that in anyone of the aforementioned pods 100, 1000, 2000 the primary layer 310, 3100 may comprise a surface layer 319, 3190. For example, the surface layer 319, 3190 may be a layer within the material or below the surface of the material that may be provided by treatment of the primary layer 310, 3100 in a chemical process, e.g. using acids, and/or in a mechanical process, such as a calender process. Figures 5, 8, 9, and 12 indicate the existence of such surface layer 319, 3190 exemplarily by dashed lines. The surface layer 319, 3190 may extend between both sides of the primary layer 310 or may extend from one side into the primary layer 310, 3100 up to a certain depth. The surface layer 319, 3190 may provide the primary layer 310, 3100 with a defined pore size, air permeability and/or surface roughness. For example, in the pods 100, 2000 comprising a secondary layer, the surface layer 319 may be provided for improving bonding of the primary layer 310 to the secondary layer 320. In comparison, in the pod 1000, the oxygen barrier function of the primary layer 3100 may be provided by the surface layer 3190.

A further aspect of the present invention relates to a use of anyone of the above described pods 100, 1000, 2000 for preparing a beverage in a beverage production machine that has a pod holder with opening elements.

A further disclosure relates to a method for manufacturing the described pods 100, 2000 for preparing a beverage in a beverage production machine.

The method comprises the step of providing two first sheet elements. Each of the two first sheet elements are made of a formable cellulose-based material. For example, a formable paper material (e.g. as described above) or parchment paper may be used as material for the first sheet elements. The two first sheet elements may be provided by cutting or punching a sheet made of the formable cellulose-based material. For example, at least one or both of the first sheet elements may have a disc shape.

An opening, such as the opening 108 exemplarily illustrated in the Figures, is cut into one of the first sheet elements. Therein, it is conceivable that the opening 108 may be cut in the first sheet element before, upon or after the two first sheet elements are cut or punched from the sheet.

Two second sheet elements are provided. Therein, each of the second sheet elements are made of a material having an oxygen barrier function. For example, the materials described above for the secondary layer 320, such as the (multilayer) compostable plastic film, may be used.

Each of the first sheet elements are connected with one of the second sheet elements to provide a multi-layered body structure, such as the above described multi-layered body structure 170, respectively. Therein, each of the multi-layered body structures 170 comprises a primary body layer, such as the above described primary body layer 171, which is made by the respective first sheet element. Furthermore, each of the multi-layered body structures 170 comprises a secondary body layer, such as the above described secondary body layer 172, which is made by the respective second sheet element. The opening 108 of the respective first sheet element is completely covered by a covering part 173 of the second sheet element. The covering part 173 is exemplarily illustrated in Figure 13 as a section of the second sheet element.

The two first sheet elements (or the two multi-layered body structures 170) are formed into the shape of a half-shell (such as the aforementioned half-shells 101, 102), respectively. For example, the first sheet elements or the two multi-layered body structures 170 may be formed into the shape of a half-shell 101, 102, respectively, by drawing at least part of the respective multi-layered body structure 170 into a forming die. For this, preferably a mechanical punch may be used for deep drawing the respective multi-layered body structure 170. However, this is only an example and other processes are conceivable. Therein, it is conceivable that the half-shells 101, 102 may be formed before or after cutting the opening 108 into the first sheet element. Preferably, the half-shells 101, 102 may be formed before or after cutting or punching the other opening 108, if present, into the respective first sheet element.

Each of the two half-shells 101, 102 may comprises a circumferential flange, such as the above described circumferential flange 140.

The covering part 173 is covered across the opening 108 with a sheet material. The sheet material is then connected (preferably to the second sheet element) at a connection area circumferentially surrounding the opening 108, such as the above described connection area 13 or attachment area 12 in Figure 13. For example, heat sealing or ultrasonic sealing may be used for this purpose.

Therein, it is conceivable that this step of covering the covering part 173 may be applied after forming the first sheet elements or after forming the multi-layered body structures 170 into the shape of a half-shell 101, 102, respectively. Alternatively, the step of covering the covering part 173 may be applied before forming the first sheet elements or the multi-layered body structures 170 into the shape of a half-shell 101, 102, respectively.

Therein, it has been found advantageous if preferably the connection area 13 is pinched from opposite sides of the first sheet element or of the multi-layered body structure 170 when forming the respective half-shell 101, 102.

The so connected sheet material along with the covering part 173 forms a delivery wall, such as the above described delivery wall 130. Therein, the delivery wall 130 has a multi-layered structure, such as the above described multi-layered structure 300, which comprises at least one primary layer, such as the above described primary layer 310.

The primary layer 310 is made by the sheet material. The multi-layered structure 300 further comprises a secondary layer, such as the above described secondary layer 320. The secondary layer is made by the covering part 173, which is integral with the secondary body layer 172, and thus, the secondary layer 320 is integral with the secondary body layer 172 so that a single layer, such as the above described single layer 107, of the pod 100, 2000 can be formed.

An injection wall, such as the above described injection wall 120 for injecting a fluid into the pod 100, 1000, 2000, is formed. Therein, it is conceivable that the injection wall 120 may be formed when forming one of the half-shells 101, 102, such as, for example the one half-shell 101, 102 other than the half-shell 101, 102 comprising the opening 108 and/or the delivery wall 130. Alternatively, the injection wall 120 may be formed by cutting another opening 108 into one of the first sheet elements, which preferably is the one first sheet element other than the first sheet element into which the said opening 108 is cut, so that the respective first sheet element comprises the other opening 108. Then, the other opening 108 may be covered with another covering part 173 of the respective second sheet element upon connecting the respective first and second sheet elements. Lastly, the covering part 173 may be covered across the other opening 108 with another sheet material. The other sheet material may be connected (e.g. by heat sealing or ultrasonic sealing) at another connection area, such as the above described connection area 13, which may circumferentially surround the other opening 108. Accordingly, the so connected other sheet material along with the other covering part 173 may form the injection wall 120 having a multi-layered structure 300 with at least one other primary layer 310 made by the respective first sheet element, and another secondary layer 320 made by the other covering part 173 and being integral with the respective secondary body layer 172 to form a or the single layer 107 of the pod 100, 2000.

A substance, such as the above described substance 105, that is required for the preparation of the beverage is provided.

The two half-shells 101, 102 are connected to form a pod body, such as the above described pod body 110, around the substance 105 to form the pod 100, 2000. The pod body 110 together with the delivery wall 130 and the injection wall 120 delimit a chamber, such as the above described chamber 103, containing the substance 105. For example, the two half-shells 101, 102 may be connected to each other via the circumferential flanges 140, if present. Therein, the half-shells 101, 102 may be sealingly connected via a sealing section extending along the perimeter of each of the half-shells 101, 102, whereby preferably the circumferential flanges 140 may form the sealing section. For connecting the two half-shells 101, 102 it is conceivable that a vacuum may be applied and/or heat sealing or ultrasonic sealing may be used.

The invention is not limited by the embodiments as described hereinabove, as long as being covered by the appended claims.

## Claims

1. A pod (100, 2000) for preparing a beverage in a beverage production machine, wherein the pod (100, 2000) is made of a home-compostable material composition and comprises:
• a pod body (110) being composed of two half-shells (101, 102) being connected to each other so as to delimit a chamber (103) for containing a substance (105) for the preparation of the beverage,
• an injection wall (120) for injecting a fluid in the chamber (103) for preparing the beverage upon interaction of the fluid with the substance (105); and
• a delivery wall (130) being connected to the pod body (110) to close the chamber (103), the delivery wall (130) being adapted to be opened upon interaction with external opening elements under the effect of rising pressure of the fluid being injected into the pod (100, 2000) to dispense the prepared beverage from the pod (100, 2000),
wherein the delivery wall (130) has a multi-layered structure (300) comprising:
• at least one primary layer (310) made of a cellulose-based material (311) or a regenerated cellulose material (312), and
• a secondary layer (320) with an oxygen barrier function.

2. The pod (100, 2000) according to claim 1, wherein the primary layer (310) comprises a cellulose fiber material and/or is made of paper (3111), supercalendered paper (3112) or filter paper (3113).

3. The pod (100, 2000) according to claim 1 or claim 2, wherein the secondary layer (320) comprises a coating (321) or a preferably multilayer compostable plastic film, and wherein preferably the coating (321) or the preferably multilayer compostable plastic film comprises
- a layer of Butenediol-vinyl-alcohol-copolymer (BVOH) (3211), or
- a layer of Polyvinyl-alcohol (PVOH) (3212), or
- Polyhydroxyalkanoates (PHA) (3213), or
- a metallization coating (3214), or
- a SiOx based coating (3215), or
- an AlOx based coating (3216).

4. The pod (100, 2000) according to claim 3, wherein the coating (321) or the preferably multilayer compostable plastic film is applied onto the primary layer (310).

5. The pod (100, 2000) according to any one of the preceding claims, wherein the multi-layered structure (300) comprises at least two of the primary layers (310), wherein preferably the secondary layer (320) is sandwiched between the primary layers (310), and/or wherein preferably the primary layers (310) comprise or are made of the same or different materials.

6. The pod (100, 2000) according to any one of the preceding claims, wherein the multi-layered structure (300) of the delivery wall (130) further comprises an interface layer (370) that is sandwiched between the primary layer (310) and the secondary layer (320), and/or that is sandwiched by the primary layers (310), if present, wherein preferably the interface layer (370) comprises an adhesive (371), which preferably is a water-based dispersion of a polyester-polyurethane elastomer.

7. The pod (100, 2000) according to any one of the preceding claims, wherein the multi-layered structure (300) of the delivery wall (130) comprises:
a. a retention layer (350) being adapted to be opened upon interaction with external opening elements under the effect of rising pressure of the fluid being injected into the pod (100, 2000), wherein preferably the retention layer (350) is formed by or comprises at least the secondary layer (320) or the primary layer (310) or, if present, at least one of the primary layers (310) and/or
b. a filter layer (360) for filtering out particles from the prepared beverage dispensed via the delivery wall (130), wherein preferably the filter layer (360) is formed by or comprises the primary layer (310) or, if present, at least one of the primary layers (310).

8. A pod (1000, 2000) for preparing a beverage in a beverage production machine, wherein the pod (1000) is made of a home-compostable material composition and comprises:
• a pod body (110) being composed of two half-shells (101, 102) being connected to each other so as to delimit a chamber (103) for containing a substance (105) for the preparation of the beverage,
• an injection wall (120) for injecting a fluid in the chamber (103) for preparing the beverage upon interaction of the fluid with the substance (105); and
• a delivery wall (130) being connected to the pod body (110) to close the chamber (103), the delivery wall (130) being adapted to be opened upon interaction with external opening elements under the effect of rising pressure of the fluid being injected into the pod (1000, 2000) to dispense the prepared beverage from the pod (1000, 2000),
wherein the delivery wall (130) has a multi-layered structure (300) comprising a primary layer (3100) having an oxygen barrier function, wherein the primary layer (3100) is made of
- parchment paper, or
- a compostable biopolymer comprising
∘ a film based on Polyhydroxyalkanoates (PHA), or
∘ a multilayer compostable plastic film comprising a layer of Butenediol-vinyl-alcohol-copolymer (BVOH) or a layer of Polyvinyl-alcohol (PVOH).

9. The pod (100,1000) according to any one of the preceding claims, wherein the primary layer (310, 3100) or, if present, at least one of the primary layers (310) comprises a surface layer (319, 3190) with a defined pore size, air permeability and/or surface roughness, preferably for binding the secondary layer (320), if present, or preferably comprising the oxygen barrier function of the primary layer (3100), and wherein preferably the surface layer (319, 3190) is provided by treatment of the primary layer (310, 3100) in a chemical process, e.g. using acids, and/or in a mechanical process.

10. The pod (100,1000) according to any one of the preceding claims, wherein the injection wall (120) is provided with, and preferably integrally made with, the pod body (110), preferably with one of the half-shells (101, 102), and more preferred with the half-shell (101, 102) other than the half-shell (101, 102) comprising the delivery wall (130), and/or wherein the delivery wall (130) is connected to one of the half-shells (101, 102) to close the chamber (103), preferably to close an opening (108) in the half-shell (101, 102), and/or wherein the injection wall (120) is connected to the pod body (110), preferably to one of the half-shells (101, 102), to close the chamber (103), preferably to close an opening (108) in the pod body (110) or the respective half-shell (101, 102).

11. The pod (100,1000) according to any one of the preceding claims, wherein the half-shells (101, 102) are each made of or comprising a cellulose-based material, preferably a formable paper material and/or parchment paper.

12. The pod (100,1000) according to any one of the preceding claims, wherein the half-shells (101, 102) each have a multi-layered body structure (170) comprising:
• a primary body layer (171) made of a cellulose-based material, preferably a formable paper material, and
• a secondary body layer (172) with an oxygen barrier function.

13. The pod (100,1000) according to claim 12, wherein the primary body layer (171) is arranged opposite to the chamber (103) with respect to the secondary body layer (172).

14. The pod (100,1000) according to claim 12 or 13, wherein the secondary body layer (172) is made integral with the delivery wall (130), preferably with the secondary layer (320) of the delivery wall (130), as a single layer (107) of the pod (100, 1000),
wherein preferably the primary layer (310) or, if present, at least one of the primary layers (310) is arranged opposite to the primary body layer (171) with respect to the single layer (107), preferably the secondary layer (320) or the secondary body layer (172), and/or
wherein preferably, at the delivery wall (130), the single layer (107) or the secondary layer (320) is arranged opposite to the chamber (103) with respect to the primary layer (310) or, if present, at least one of the primary layers (310).

15. Use of a pod (100, 1000, 2000) according to any one of the preceding claims 1 to 14 for preparing a beverage in a beverage production machine having a pod holder with opening elements.

## Patentansprüche

1. Kapsel (100, 2000) zum Zubereiten eines Getränks in einer Getränkeherstellungsmaschine, wobei die Kapsel (100, 2000) aus einer heimkompostierbaren Materialzusammensetzung gefertigt ist und umfasst:
• einen Kapselkörper (110), der aus zwei Halbschalen (101, 102) besteht, die so miteinander verbunden sind, dass sie eine Kammer (103) zum Aufnehmen einer Substanz (105) für die Zubereitung des Getränks begrenzen,
• eine Einspritzwand (120) zum Einspritzen eines Fluids in die Kammer (103) zum Zubereiten des Getränks bei Wechselwirkung des Fluids mit der Substanz (105); und
• eine Abgabewand (130), die mit dem Kapselkörper (110) verbunden ist, um die Kammer (103) zu verschließen, wobei die Abgabewand (130) angepasst ist, um bei Wechselwirkung mit externen Öffnungselementen unter der Wirkung von steigendem Druck des Fluids, das in die Kapsel (100, 2000) eingespritzt wird, geöffnet zu werden, um das zubereitete Getränk aus der Kapsel (100, 2000) auszugeben,
wobei die Abgabewand (130) eine mehrschichtige Struktur (300) aufweist, umfassend:
• mindestens eine Primärschicht (310), die aus einem zellulosebasierten Material (311) oder einem regenerierten Zellulosematerial (312) gefertigt ist, und
• eine Sekundärschicht (320) mit einer Sauerstoffbarrierefunktion.

2. Kapsel (100, 2000) nach Anspruch 1, wobei die Primärschicht (310) ein Zellulosefasermaterial umfasst und/oder aus Papier (3111), hochsatiniertem Papier (3112) oder Filterpapier (3113) gefertigt ist.

3. Kapsel (100, 2000) nach Anspruch 1 oder 2, wobei die Sekundärschicht (320) eine Beschichtung (321) oder eine vorzugsweise mehrschichtige kompostierbare Kunststofffolie umfasst, und wobei die Beschichtung (321) oder die vorzugsweise mehrschichtige kompostierbare Kunststofffolie vorzugsweise umfasst
- eine Schicht aus Butendiol-Vinylalkohol-Copolymer (BVOH) (3211) oder
- eine Schicht aus Polyvinylalkohol (PVOH) (3212) oder
- Polyhydroxyalkanoate (PHA) (3213) oder
- eine Metallisierungsbeschichtung (3214) oder
- eine Beschichtung auf SiOx-Basis (3215) oder
- eine Beschichtung auf AlOx-Basis (3216).

4. Kapsel (100, 2000) nach Anspruch 3, wobei die Beschichtung (321) oder die vorzugsweise mehrschichtige kompostierbare Kunststofffolie auf die Primärschicht (310) aufgebracht ist.

5. Kapsel (100, 2000) nach einem der vorstehenden Ansprüche, wobei die mehrschichtige Struktur (300) mindestens zwei der primären Schichten (310) umfasst, wobei die sekundäre Schicht (320) vorzugsweise zwischen den primären Schichten (310) angeordnet ist und/oder wobei die primären Schichten (310) vorzugsweise dieselben oder unterschiedliche Materialien umfassen oder daraus gefertigt sind.

6. Kapsel (100, 2000) nach einem der vorstehenden Ansprüche, wobei die mehrschichtige Struktur (300) der Abgabewand (130) ferner eine Grenzflächenschicht (370) umfasst, die zwischen der Primärschicht (310) und der Sekundärschicht (320) angeordnet ist und/oder die, falls vorhanden, zwischen den Primärschichten (310) angeordnet ist, wobei die Grenzflächenschicht (370) vorzugsweise einen Klebstoff (371) umfasst, der vorzugsweise eine wasserbasierte Dispersion eines PolyesterPolyurethan-Elastomers ist.

7. Kapsel (100, 2000) nach einem der vorstehenden Ansprüche, wobei die mehrschichtige Struktur (300) der Abgabewand (130) umfasst:
a. eine Rückhalteschicht (350), die angepasst ist, um bei Wechselwirkung mit externen Öffnungselementen unter der Wirkung von steigendem Druck des Fluids, das in die Kapsel (100, 2000) eingespritzt wird, geöffnet zu werden, wobei die Rückhalteschicht (350) vorzugsweise durch mindestens die Sekundärschicht (320) oder die Primärschicht (310) oder, falls vorhanden, mindestens eine der Primärschichten (310) ausgebildet ist oder diese umfasst und/oder
b. eine Filterschicht (360) zum Herausfiltern von Partikeln aus dem zubereiteten Getränk, das über die Ausgabewand (130) ausgegeben wird, wobei die Filterschicht (360) vorzugsweise durch die Primärschicht (310) oder, falls vorhanden, mindestens eine der Primärschichten (310) ausgebildet wird oder diese umfasst.

8. Kapsel (1000, 2000) zum Zubereiten eines Getränks in einer Getränkeherstellungsmaschine, wobei die Kapsel (1000) aus einer heimkompostierbaren Materialzusammensetzung gefertigt ist und umfasst:
• einen Kapselkörper (110), der aus zwei Halbschalen (101, 102) besteht, die so miteinander verbunden sind, dass sie eine Kammer (103) zum Aufnehmen einer Substanz (105) für die Zubereitung des Getränks begrenzen,
• eine Einspritzwand (120) zum Einspritzen eines Fluids in die Kammer (103) zum Zubereiten des Getränks bei Wechselwirkung des Fluids mit der Substanz (105); und
• eine Abgabewand (130), die mit dem Kapselkörper (110) verbunden ist, um die Kammer (103) zu verschließen, wobei die Abgabewand (130) angepasst ist, um bei Wechselwirkung mit externen Öffnungselementen unter der Wirkung von steigendem Druck des Fluids, das in die Kapsel (1000, 2000) eingespritzt wird, geöffnet zu werden, um das zubereitete Getränk aus der Kapsel (1000, 2000) auszugeben, wobei die Abgabewand (130) eine mehrschichtige Struktur (300) aufweist, umfassend eine Primärschicht (3100), die eine Sauerstoffbarrierefunktion aufweist, wobei die Primärschicht (3100) gefertigt ist aus
- Pergamentpapier oder
- einem kompostierbaren Biopolymer, umfassend
∘ eine Folie auf Basis von Polyhydroxyalkanoaten (PHA) oder
∘ eine mehrschichtige kompostierbare Kunststofffolie, umfassend eine Schicht aus Butendiol-Vinylalkohol-Copolymer (BVOH) oder eine Schicht aus Polyvinylalkohol (PVOH).

9. Kapsel (100, 1000) nach einem der vorstehenden Ansprüche, wobei die Primärschicht (310, 3100) oder, falls vorhanden, mindestens eine der Primärschichten (310) eine Oberflächenschicht (319, 3190) mit einer definierten Porengröße, Luftdurchlässigkeit und/oder Oberflächenrauheit umfasst, vorzugsweise zum Binden der Sekundärschicht (320), falls vorhanden, oder vorzugsweise umfassend die Sauerstoffbarrierefunktion der Primärschicht (3100), und wobei vorzugsweise die Oberflächenschicht (319, 3190) durch Behandlung der Primärschicht (310, 3100) in einem chemischen Prozess, z. B. unter Verwendung von Säuren, und/oder in einem mechanischen Prozess bereitgestellt wird.

10. Kapsel (100, 1000) nach einem der vorstehenden Ansprüche, wobei die Einspritzwand (120) mit dem Kapselkörper (110) bereitgestellt ist und vorzugsweise einstückig daraus gefertigt ist, vorzugsweise mit einer der Halbschalen (101, 102), und stärker bevorzugt mit der anderen Halbschale (101, 102) als der Halbschale (101, 102), umfassend die Abgabewand (130), und/oder wobei die Abgabewand (130) mit einer der Halbschalen (101, 102) verbunden ist, um die Kammer (103) zu verschließen, vorzugsweise um eine Öffnung (108) in der Halbschale (101, 102) zu verschließen, und/oder wobei die Einspritzwand (120) mit dem Kapselkörper (110) verbunden ist, vorzugsweise mit einer der Halbschalen (101, 102), um die Kammer (103) zu verschließen, vorzugsweise um eine Öffnung (108) in dem Kapselkörper (110) oder der jeweiligen Halbschale (101, 102) zu verschließen.

11. Kapsel (100, 1000) nach einem der vorstehenden Ansprüche, wobei die Halbschalen (101, 102) jeweils aus einem zellulosebasierten Material gefertigt sind oder dieses umfassen, vorzugsweise aus einem formbaren Papiermaterial und/oder Pergamentpapier.

12. Kapsel (100, 1000) nach einem der vorstehenden Ansprüche, wobei die Halbschalen (101, 102) jeweils eine mehrschichtige Körperstruktur (170) aufweisen, umfassend:
• eine Primärkörperschicht (171), die aus einem zellulosebasierten Material gefertigt ist, vorzugsweise einem formbaren Papiermaterial, und
• eine sekundäre Körperschicht (172) mit einer Sauerstoffbarrierefunktion.

13. Kapsel (100, 1000) nach Anspruch 12, wobei die primäre Körperschicht (171) in Bezug auf die sekundäre Körperschicht (172) gegenüber der Kammer (103) eingerichtet ist.

14. Kapsel (100, 1000) nach Anspruch 12 oder 13, wobei die sekundäre Körperschicht (172) einstückig mit der Abgabewand (130), vorzugsweise mit der sekundären Schicht (320) der Abgabewand (130), als eine einzelne Schicht (107) der Kapsel (100, 1000) gefertigt ist.
wobei vorzugsweise die Primärschicht (310) oder, falls vorhanden, mindestens eine der Primärschichten (310) gegenüber der Primärkörperschicht (171) in Bezug auf die Einzelschicht (107), vorzugsweise die Sekundärschicht (320) oder die Sekundärkörperschicht (172), eingerichtet ist und/oder wobei vorzugsweise an der Abgabewand (130) die Einzelschicht (107) oder die Sekundärschicht (320) gegenüber Der Kammer (103) in Bezug auf die Primärschicht (310) oder, falls vorhanden, mindestens eine der Primärschichten (310) eingerichtet ist.

15. Verwendung einer Kapsel (100, 1000, 2000) nach einem der vorstehenden Ansprüche 1 bis 14 zum Zubereiten eines Getränks in einer Getränkeherstellungsmaschine, die einen Kapselhalter mit Öffnungselementen aufweist.

## Revendications

1. Capsule (100, 2000) pour la préparation d'une boisson dans une machine de production de boissons, dans laquelle la capsule (100, 2000) est faite d'une composition de matériau compostable à domicile et comprend :
• un corps de capsule (110) composé de deux demi-coques (101, 102) reliées l'une à l'autre de manière à délimiter une chambre (103) pour contenir une substance (105) pour la préparation de la boisson,
• une paroi d'injection (120) pour injecter un fluide dans la chambre (103) afin de préparer la boisson lors d'une interaction du fluide avec la substance (105) ; et
• une paroi de distribution (130) reliée au corps de la capsule (110) pour fermer la chambre (103), la paroi de distribution (130) étant conçue pour s'ouvrir lors d'une interaction avec des éléments d'ouverture extérieurs sous l'effet de la pression croissante du fluide injecté dans la capsule (100, 2000) pour distribuer la boisson préparée depuis la capsule (100, 2000),
dans laquelle la paroi de distribution (130) a une structure multicouche (300), comprenant :
• au moins une couche primaire (310) faite d'un matériau à base de cellulose (311) ou d'un matériau à base de cellulose régénérée (312), et
• une couche secondaire (320) ayant une fonction de barrière à l'oxygène.

2. Capsule (100, 2000) selon la revendication 1, dans laquelle la couche primaire (310) comprend un matériau en fibres de cellulose et/ou est faite de papier (3111), de papier supercalandré (3112) ou de papier filtre (3113).

3. Capsule (100, 2000) selon la revendication 1 ou la revendication 2, dans laquelle la couche secondaire (320) comprend un revêtement (321) ou un film plastique compostable de préférence multicouche, et dans laquelle, de préférence, le revêtement (321) ou le film plastique compostable de préférence multicouche comprend
- une couche de copolymère de butènediol et d'alcool vinylique (BVOH) (3211), ou
- une couche d'alcool polyvinylique (PVOH) (3212), ou
- des polyhydroxyalcanoates (PHA) (3213), ou
- un revêtement de métallisation (3214), ou
- un revêtement à base de SiOx (3215), ou
- un revêtement à base d'AlOx (3216).

4. Capsule (100, 2000) selon la revendication 3, dans laquelle le revêtement (321) ou le film plastique compostable, de préférence multicouche, est appliqué sur la couche primaire (310).

5. Capsule (100, 2000) selon l'une quelconque des revendications précédentes, dans laquelle la structure multicouche (300) comprend au moins deux des couches primaires (310), dans laquelle, de préférence, la couche secondaire (320) est prise en sandwich entre les couches primaires (310), et/ou dans laquelle, de préférence, les couches primaires (310) comprennent ou sont faites de matériaux identiques ou différents.

6. Capsule (100, 2000) selon l'une quelconque des revendications précédentes, dans laquelle la structure multicouche (300) de la paroi de distribution (130) comprend en outre une couche d'interface (370) qui est prise en sandwich entre la couche primaire (310) et la couche secondaire (320), et/ou qui est prise en sandwich par les couches primaires (310), le cas échéant, dans laquelle, de préférence, la couche d'interface (370) comprend un adhésif (371), qui est de préférence une dispersion à base d'eau d'un élastomère de polyester-polyuréthane.

7. Capsule (100, 2000) selon l'une quelconque des revendications précédentes, dans laquelle la structure multicouche (300) de la paroi de distribution (130) comprend :
a. une couche de rétention (350) conçue pour s'ouvrir lors d'une interaction avec des éléments d'ouverture extérieurs sous l'effet de la pression croissante du fluide injecté dans la capsule (100, 2000), dans laquelle, de préférence, la couche de rétention (350) est formée par ou comprend au moins la couche secondaire (320) ou la couche primaire (310) ou, le cas échéant, au moins l'une parmi les couches primaires (310), et/ou
b. une couche filtrante (360) pour filtrer les particules de la boisson préparée distribuée par l'intermédiaire de la paroi de distribution (130), dans laquelle, de préférence, la couche filtrante (360) est formée par ou comprend la couche primaire (310) ou, le cas échéant, au moins l'une parmi les couches primaires (310).

8. Capsule (1000, 2000) pour la préparation d'une boisson dans une machine de production de boissons, dans laquelle la capsule (1000) est faite à partir d'une composition de matériau compostable à domicile et comprend :
• un corps de capsule (110) composé de deux demi-coques (101, 102) reliées l'une à l'autre de manière à délimiter une chambre (103) pour contenir une substance (105) pour la préparation de la boisson,
• une paroi d'injection (120) pour injecter un fluide dans la chambre (103) afin de préparer la boisson lors d'une interaction du fluide avec la substance (105) ; et
• une paroi de distribution (130) reliée au corps de la capsule (110) pour fermer la chambre (103), la paroi de distribution (130) étant conçue pour s'ouvrir lors d'une interaction avec des éléments d'ouverture extérieurs sous l'effet de la pression croissante du fluide injecté dans la capsule (1000, 2000) pour distribuer la boisson préparée depuis la capsule (1000, 2000), dans laquelle la paroi de distribution (130) a une structure multicouche (300) comprenant une couche primaire (3100) ayant une fonction de barrière à l'oxygène, dans laquelle la couche primaire (3100) est faite de
• papier sulfurisé, ou
• un biopolymère compostable comprenant
∘ un film à base de polyhydroxyalcanoates (PHA), ou
∘ un film plastique compostable multicouche comprenant une couche de copolymère de butènediol et d'alcool vinylique (BVOH) ou une couche d'alcool polyvinylique (PVOH).

9. Capsule (100, 1000) selon l'une quelconque des revendications précédentes, dans laquelle la couche primaire (310, 3100) ou, le cas échéant, au moins l'une parmi les couches primaires (310) comprend une couche de surface (319, 3190) avec une taille de pore, une perméabilité à l'air et/ou une rugosité de surface définies, de préférence pour lier la couche secondaire (320), le cas échéant, ou de préférence comprenant la fonction de barrière à l'oxygène de la couche primaire (3100), et dans laquelle, de préférence, la couche de surface (319, 3190) est obtenue par traitement de la couche primaire (310, 3100) dans un processus chimique, par exemple à l'aide d'acides, et/ou dans un procédé mécanique.

10. Capsule (100, 1000) selon l'une quelconque des revendications précédentes, dans laquelle la paroi d'injection (120) est fournie avec, et de préférence formée d'un seul tenant avec, le corps de capsule (110), de préférence avec l'une des demi-coques (101, 102), et plus préférentiellement avec la demi-coque (101, 102) autre que la demi-coque (101, 102) comprenant la paroi de distribution (130), et/ou dans laquelle la paroi de distribution (130) est reliée à l'une des demi-coques (101, 102) pour fermer la chambre (103), de préférence pour fermer une ouverture (108) dans la demi-coque (101, 102), et/ou dans laquelle la paroi d'injection (120) est reliée au corps de capsule (110), de préférence à l'une des demi-coques (101, 102), pour fermer la chambre (103), de préférence pour fermer une ouverture (108) dans le corps de capsule (110) ou la demi-coque respective (101, 102).

11. Capsule (100, 1000) selon l'une quelconque des revendications précédentes, dans laquelle les demi-coques (101, 102) sont chacune faites de ou comprennent un matériau à base de cellulose, de préférence un matériau papier formable et/ou du papier sulfurisé.

12. Capsule (100, 1000) selon l'une quelconque des revendications précédentes, dans laquelle les demi-coques (101, 102) ont chacune une structure de corps multicouche (170) comprenant :
• une couche de corps primaire (171) faite d'un matériau à base de cellulose, de préférence un matériau à base de papier formable, et
• une couche de corps secondaire (172) ayant une fonction de barrière à l'oxygène.

13. Capsule (100, 1000) selon la revendication 12, dans laquelle la couche de corps primaire (171) est agencée à l'opposé de la chambre (103) par rapport à la couche de corps secondaire (172).

14. Capsule (100, 1000) selon la revendication 12 ou 13, dans laquelle la couche de corps secondaire (172) est formée d'un seul tenant avec la paroi de distribution (130), de préférence avec la couche secondaire (320) de la paroi de distribution (130), en tant que couche unique (107) de la capsule (100, 1000),
dans laquelle, de préférence, la couche primaire (310) ou, le cas échéant, au moins l'une parmi les couches primaires (310) est agencée à l'opposé de la couche de corps primaire (171) par rapport à la couche unique (107), de préférence la couche secondaire (320) ou la couche de corps secondaire (172), et/ou dans laquelle, de préférence, au niveau de la paroi de distribution (130), la couche unique (107) ou la couche secondaire (320) est agencée à l'opposé de la chambre (103) par rapport à la couche primaire (310) ou, le cas échéant, à au moins l'une parmi les couches primaires (310).

15. Utilisation d'une capsule (100, 1000, 2000) selon l'une quelconque des revendications précédentes 1 à 14 pour la préparation d'une boisson dans une machine de production de boissons ayant un porte-capsule avec des éléments d'ouverture.
